# EUROPEAN PATENT SPECIFICATION

(11) **EP 2 262 046 B1**
(45) Date of publication and mention of the grant of the patent: **20.12.2017**
(21) Application number: 09176443.1
(22) Date of filing: 27.03.2006
(51) Int. Cl.: H01M 10/06, H01M 10/12

(54) **Lead-Acid Rechargeable Battery**
Wiederaufladbare Blei-Säure-Batterie
Batterie rechargeable à acide de plomb

(30) Priority: 06.04.2005 JP 2005109649; 06.04.2005 JP 2005109650; 06.04.2005 JP 2005109651
(43) Date of publication of application: 15.12.2010
(62) Divisional of application: 06730023.6
(73) Proprietor: GS Yuasa International Ltd., Kyoto-shi, Kyoto 601-8520 (JP)
(72) Inventor: Anzai, Seiji, Osaka City Osaka (JP); Ishimaki, Kei, Osaka City Osaka (JP); Yasuda, Hiroshi, Osaka City Osaka (JP); Furuya, Sadao, Osaka City Osaka (JP)
(74) Representative: Gill Jennings & Every LLP

(56) References cited:
- US-B1- 6 265 108
- US-B1- 6 274 263

## Description

### TECHNICAL FIELD

The present invention relates to lead-acid rechargeable batteries. In particular, the present invention relates to a lead-acid rechargeable battery which provides a good life expectancy without the need of replenishing water even when the electrolyte is reduced.

Lead-acid rechargeable batteries are used for various applications such as for starting a vehicle. In particular, employed as a lead-acid rechargeable battery for starting a vehicle is a lead-acid rechargeable battery of the so-called liquid-type in which both the positive and negative electrode surfaces are all soaked in an electrolyte (dilute sulfuric acid) and a liquid-inlet cap (vent cap) is installed in the liquid inlet to communicate between the inside and outside of the battery. In addition to this type of battery, also employed is a valve-regulated lead-acid rechargeable battery of the negative electrode absorption type in which an oxygen gas generated within the battery is absorbed in the negative electrode plate exposed above the electrolyte.

In the valve-regulated lead-acid rechargeable battery of the negative electrode absorption type, an oxygen gas generated from the positive electrode plate upon charging is absorbed in the negative electrode plate, thereby retarding generation of hydrogen on the negative electrode plate. Accordingly, the electrolysis of water in the electrolyte and loss of water in the electrolyte due to this are advantageously retarded. In contrast to this, in the liquid-type lead-acid rechargeable battery, both the positive and negative electrode plates are soaked in the electrolyte. This makes a larger amount of electrolyte available around the electrode plates than in the valve-regulated lead-acid rechargeable battery of the negative electrode absorption type which requires the negative electrode plates to be exposed above the electrolyte. Thus, the liquid-type lead-acid rechargeable battery has a discharge capacity advantage.

The liquid-type lead-acid rechargeable battery has a discharge capacity advantage over the valve-regulated lead-acid rechargeable battery. However, when compared with the valve-regulated lead-acid rechargeable battery, the liquid-type lead-acid rechargeable battery suffers from a larger amount of loss of water in the electrolyte (loss of the electrolyte) because the oxygen and hydrogen gases remaining inside the battery are expelled through the vent hole provided in the liquid-inlet cap.

The water loss through the liquid-inlet cap is also produced by evaporation in addition to the electrolysis of water in the electrolyte as mentioned above. In particular, the lead-acid rechargeable battery for starting a vehicle is often installed within the high-temperature engine room under a condition in which the water evaporation is all the more accelerated.

Additionally, the electrolyte loss is also produced by an electrolyte mist being dissipated out of the battery through the vent hole. The electrolyte mist may be generated from the electrolyte surface being rocked due to accelerations and decelerations or vibrations of the vehicle during running. The electrolyte mist may also be generated from the electrolyte surface in the form of bubbles of oxygen and hydrogen gases that occur upon charging by the vehicle alternator.

To retard such a loss of water in the electrolyte, for example, Patent Document 1 suggests that a porous material be provided in the vent passage within the liquid-inlet cap to control loss of pressure due to the porous material and control the pore diameter.

This prevents an electrolyte mist within the battery or gases laden with evaporated water (air, and oxygen and hydrogen gases) from being readily replaced with an external gas (air). This also allows the electrolyte mist and the evaporated water to be condensed within the porous material and refluxed into the battery, thereby retarding loss of water within the battery.

The porous material provided in the vent passage was capable of preventing loss of water in the electrolyte to some extent. However, due to the presence of the vent passage always communicating between the inside and outside of the battery, and especially, during its storage or service under ambient temperatures of higher than 40 degrees C, there was still a large amount of loss of electrolyte.

On the other hand, a battery is disclosed in Patent Document 2, which includes a control valve and has positive and negative electrode plates entirely soaked in an electrolyte. The battery disclosed in Patent Document 2 has the control valve installed in the liquid inlet, and thus the electrolyte cannot be easily replenished. Thus, a reduction of the electrolyte during service would unavoidably cause significant degradation in discharge capacity because the electrolyte cannot be replenished.

Furthermore, a lead-acid rechargeable battery is disclosed in Patent Document 3, which has a control valve structure installed in a liquid-inlet cap. However, since the liquid-inlet cap and the valve structure are integrated, this liquid-inlet cap is not interchangeable with conventional liquid-inlet caps that have no valve structure. Thus, such a total difference between these liquid-inlet caps has been an impediment to reduction in costs of the lead-acid rechargeable battery.

On the other hand, the valve-regulated lead-acid rechargeable battery having a limited amount of electrolyte tends to be less resistant to heat when compared with the liquid-type lead-acid rechargeable battery. However, unlike the liquid-type lead-acid rechargeable battery, the valve-regulated lead-acid rechargeable battery can be mounted in a passenger room or the rear trunk room other than in the high-temperature engine room because an acidic gas is prevented from being expelled out of the battery and the battery can be installed in a preferred orientation.

The valve-regulated lead-acid rechargeable battery has a well-known control valve structure with a cap-shaped valve installed in a cylindrical vent that serves also as a liquid inlet (see Patent Document 4) or with a plate-shaped valve assembly installed on a vent opening that serves also as a liquid inlet in the same manner (see Patent Document 5).

In the control valve structure as disclosed in Patent Documents 4 and 5 above, the vent opening must serve also as the liquid inlet because the control valve structure is formed in the liquid inlet. Since the electrolyte is supplied through the liquid inlet in an electrolyte injection step, a larger opening area is preferably provided for the liquid inlet. This allows the electrolyte to be smoothly supplied and replaced with the gas inside the battery, thereby making it possible to supply the electrolyte at a higher rate while preventing overflow of the electrolyte.

On the other hand, in terms of reliability and parts costs of the control valve, the opening area of the vent opening (liquid inlet) needs only to be just enough to be able to expel the internally remaining gas. Thus, to provide secure sealing of the control valve, the area sealed by the control valve is preferably minimized. Additionally, as the opening area of the vent opening (liquid inlet) increases, the cap-shaped valve and the plate-shaped valve assembly are required to increase in size. Since this causes the control valve structure to increase in size and its parts materials to also increase in costs, the opening area of the vent opening is preferably made as small as possible.

In this context, as disclosed in Patent Document 3, the liquid inlet with a larger opening area may be provided with a liquid-inlet cap that includes a control valve structure, thereby advantageously allowing for injecting the electrolyte at a higher rate in the injection step. Additionally, the larger opening area would make it easier to drain an electrolyte of a lower specific gravity even when the electrolyte of the lower specific gravity is first injected for electrochemical formation so that the electrochemically formed liquid is drained out of the battery, and then an electrolyte of a high specific gravity is injected in order to improve the efficiency of the electrochemical formation.

On the other hand, the vent opening of the control valve provided in the liquid-inlet cap can be reduced in diameter, with its maximum diameter equal to the inner diameter of the cylindrical body of the liquid-inlet cap, thereby making it possible to reduce the sizes of the valve assembly. Accordingly, this allows the valve assembly to seal a reduced area, thereby providing a control valve with enhanced hermeticity and reliability.

However, the liquid-inlet cap having the control valve structure as disclosed in Patent Document 3 is different from the liquid-inlet cap that is installed in the typical liquid-type lead-acid rechargeable battery, and thus requires its own molding die to be prepared. This caused a significant increase in parts cost when compared with the conventional liquid-inlet caps that include no control valve structure. This inevitably caused the valve-regulated lead-acid rechargeable battery, in which the liquid-inlet cap having the control valve structure is installed, to be manufactured at increased costs.

On the other hand, in view of the fact that the liquid-type lead-acid rechargeable battery in which the electrolyte is decreased due to the electrolysis of water in the electrolyte, such a battery is widely used in which both the positive and negative electrode grid assemblies are formed of a Pb-Ca based alloy in order to retard the electrolysis of water. A liquid-type lead-acid rechargeable battery with both the positive and negative electrode grid assemblies formed of a Pb-Ca based alloy is also widely used for vehicle applications (see Patent Document 6).

In such a liquid-type lead-acid rechargeable battery, its grids containing almost no Sb which would otherwise reduce the hydrogenating voltage allow the electrolysis of water to be retarded, and thus provide a very good electrolyte loss performance. Accordingly, water needs to be replenished less often during the service of the lead-acid rechargeable battery.

However, the liquid-type lead-acid rechargeable battery for vehicle applications has not yet reached such a level at which entirely no water needs to be replenished. This is because of variations in charging conditions on the vehicle side or service conditions such as service ambient temperatures and frequencies of service depending on each of the vehicle, the user, and the service area.

In this context, practically available is such a lead-acid rechargeable battery whose main body is provided with a liquid inlet through which water is replenished, with a liquid-inlet cap removably installed in the liquid inlet. Alternatively, also available is such a lead-acid rechargeable battery which is provided with no liquid inlet, through which water is replenished, nor a liquid-inlet cap. This is based on the idea that when the battery is degraded in performance due to electrolyte loss, the battery is determined to be at the end of its useful life, so that the battery itself is not replenished with water but discarded and replaced with a new one.

On the other hand, the valve-regulated lead-acid rechargeable battery of the negative electrode absorption type requires no replenishment with the electrolyte at all during service life because the oxygen generated on the positive electrode is absorbed in the negative electrode, thereby retarding the electrolysis of water in the electrolyte. However, since the internal pressure of the battery may become higher or lower than the external pressure depending on the service condition of the battery during its service, the battery needs to be rigidly designed so that the difference in pressure will not cause the housing such as the battery jar or the lid to be deformed or damaged. This would result in an increase in the amount of resin used for the battery jar and the cover lid when compared with the liquid-type lead-acid rechargeable battery of the same size. The battery was thus increased in weight and manufactured at higher costs.

The valve-regulated lead-acid rechargeable battery of the negative electrode absorption type retains its electrolyte mainly in its mat separators and positive and negative active materials. It is thus necessary to keep a good contact between the electrode plate and separator interfaces. It is thus necessary to apply a suitable pressure (group pressure) all the time to the electrode plates constituting a set of electrode plates and separators. To this end, it is necessary to strictly control variations in thickness of the electrode plate and the separator and the deformation of the battery jar due to the group pressure. When compared with the liquid-type lead-acid rechargeable battery, this would result in a lower productivity and an increase in costs of the valve-regulated lead-acid rechargeable battery.
[Patent Document 1] Japanese Patent Laid-Open Publication No. Hei 7-220706
[Patent Document 2] Japanese Patent Laid-Open Publication No. 2003-142148
[Patent Document 3] Japanese Patent Laid-Open Publication No. 2003-346781
[Patent Document 4] Japanese Patent Laid-Open Publication No. 2001-102026
[Patent Document 5] Japanese Patent Laid-Open Publication No. Sho 62-147652
[Patent Document 6] Japanese Patent Laid-Open Publication No. Hei 6-267544

### DISCLOSURE OF THE INVENTION

The present invention was developed in view of the aforementioned problems with a liquid-type lead-acid rechargeable battery in which both the positive and negative electrode plates are all soaked in an electrolyte.

The present invention was developed to solve the problems with the liquid-type lead-acid rechargeable battery which suffers from a large amount of electrolyte loss and requires water to be replenished during service. The present invention was also developed to solve the problems with the valve-regulated lead-acid rechargeable battery of the negative electrode absorption type which requires no replenishment of water but strict control of the thicknesses of the electrode plates and the separators and requires the battery jar to be increased in strength, thereby resulting in higher manufacturing costs and a lower discharge capacity than the liquid-type lead-acid rechargeable battery. It is therefore a second object of the invention to provide a lead-acid rechargeable battery which is based on a totally inventive idea to have the advantages of both the conventional liquid-type lead-acid rechargeable battery and the valve-regulated lead-acid rechargeable battery. To achieve the aforementioned object, the present invention provides a lead-acid rechargeable battery which includes a positive electrode plate with a positive electrode grid of a Pb-Ca alloy; a negative electrode plate with a negative electrode grid of a Pb-Ca alloy; and a separator formed of a fibrous mat. The battery includes an electrolyte which initially entirely soaks the electrode surface of the negative electrode plate and a negative electrode strap for collectively welding the ear portion of the negative electrode plate.

According to such an arrangement, the battery serves initially as a liquid-type lead-acid rechargeable battery and then as a valve-regulated lead-acid rechargeable battery of the negative electrode absorption type because even when the amount of the electrolyte is reduced, the mat separator keeps laden with a given amount of electrolyte. This makes it possible to provide a good life expectancy under a wide range of conditions without the need of replenishing water.

The aforementioned lead-acid rechargeable battery is configured such that the negative electrode strap is formed of a lead alloy containing substantially no antimony, thereby allowing for preventing corrosion of the negative electrode strap while being exposed above the electrolyte.

Furthermore, the aforementioned lead-acid rechargeable battery may also be configured such that at least part of a surface in contact with an active material of the positive electrode grid is provided with a Pb-Sb alloy layer containing Sb. This configuration also allows for improving the adherence between the positive electrode grid and the positive active material and providing a longer-life battery.

Additionally, the aforementioned lead-acid rechargeable battery is configured such that a control valve section is installed inside the cylindrical body of the liquid-inlet cap provided in the battery casing, the control valve section being opened in response to the internal pressure of the battery and when closed, preventing oxygen from flowing from the outside of the battery to the inside of the battery. This configuration allows for preventing a vapor laden with an electrolyte mist or water in the electrolyte from being dissipated out of the battery.

Additionally, the aforementioned arrangement may also be configured such that the control valve section includes a valve storage assembly which is formed of a bottom wall having a vent hole and of a side wall provided around the bottom wall; a valve assembly disposed to cover the vent hole inside the valve storage assembly; and a retainer plate disposed on the valve assembly and having part thereof joined to the side wall. This configuration allows for using a plate-shaped valve assembly to reduce the control valve section in thickness, thus effectively reducing the size of the liquid-inlet cap and thereby manufacturing costs.

Furthermore, the aforementioned arrangement may also be configured such that the control valve section includes a bottom wall having a vent hole; a side wall provided around the bottom wall; a valve cylinder protruded from the vent hole aperture in the same direction as the side wall is protruded; a cap-shaped valve body installed in the valve cylinder; and a retainer plate disposed above the top of the cap-shaped valve body and having part thereof joined to the side wall. This configuration allows for using a plate-shaped valve assembly to reduce the control valve section in thickness, thus effectively reducing the size of the liquid-inlet cap and thereby manufacturing costs.

### IN THE DRAWINGS

Fig. 1 is a cross-sectional view of the main portion of a first example of a lead-acid rechargeable battery;
Fig. 2 is a cross-sectional view of an exemplary control valve section to be incorporated into a lead-acid rechargeable battery;
Fig. 3 is an exploded view illustrating each component of the aforementioned control valve section;
Fig. 4 is a view of the main configuration of a lead-acid rechargeable battery according to a second example;
Fig. 5 is a view of the main configuration of a lead-acid rechargeable battery according to a third example;
Fig. 6 is a cross-sectional view of a control valve section having another configuration which can be incorporated into a lead-acid rechargeable battery;
Fig. 7 is a cross-sectional view of a control valve section having a still another configuration which can be incorporated into a lead-acid rechargeable battery;
Fig. 8 is a view of the main configuration of a lead-acid rechargeable battery according to a fourth example;
Fig. 9 is a view of the main configuration of a lead-acid rechargeable battery according to a fifth example;
Fig. 10 is a view of the main configuration of a lead-acid rechargeable battery according to a sixth example;
Fig. 11 is a view of the main configuration of a lead-acid rechargeable battery according to the present invention; and
Fig. 12 is a cross-sectional view of a positive electrode plate in a lead-acid rechargeable battery according to the present invention.

Now, one example of the present invention will be described below in more detail with reference to the accompanying drawings.

### (First example)

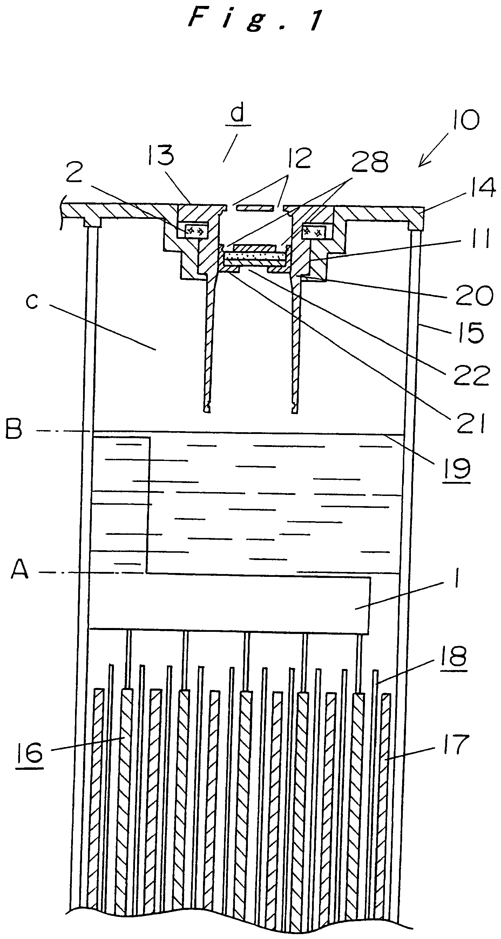

To begin with, description will be made to a first example. Fig. 1 is a cross-sectional view of the main portion of a liquid-type lead-acid rechargeable battery according to the first embodiment of the present invention.

A lead-acid rechargeable battery 10 according to the first embodiment includes a liquid-inlet cap 13 in a liquid inlet 11 provided in a battery casing. The liquid-inlet cap 13 has ventilating holes 12 for expelling a gas from the inside of the battery to the outside of the battery. Note that in the example shown in Fig. 1, the liquid inlet 11 is provided in a lid 14 that serves as the battery casing.

A positive electrode plate 16, a negative electrode plate 17, and a separator 18, which are housed in a battery jar 15
of the lead-acid rechargeable battery 10, are configured such that the electrode surfaces of the positive electrode plate 16 and the negative electrode plate 17 are soaked in an electrolyte 19. The lead-acid rechargeable battery 10 is configured such that a control valve section 21 is installed inside a cylindrical body 20 of the liquid-inlet cap 13. The control valve section 21 is provided separately from the cylindrical body 20 and responds to the internal pressure of the battery to form (open) a ventilating passage from a vent hole 22 provided on one end to ventilating openings 28 provided on the other end.

Since the control valve section 21 is provided separately from the cylindrical body 20, the cylindrical body 20 is interchangeable with a liquid-inlet cap which does not have the control valve section 21. Furthermore, the liquid-inlet cap with the control valve section is manufactured without the need for a special cylindrical body, thereby allowing for manufacturing the lead-acid rechargeable battery at drastically reduced costs. It is also possible to reduce the workload for parts stock control.

Note that the lead-acid rechargeable battery 10 is a liquid-type lead-acid rechargeable battery in which the positive and negative electrode surfaces are entirely soaked in the electrolyte 19, and does not allow a so-called oxygen gas absorption reaction to occur so that an oxygen gas generated on the positive electrode plate is absorbed in the negative electrode plate. Accordingly, the valve-opening pressure of the control valve section 21 may be set to be lower than the valve-opening pressure (about 10 kPa to 20 kPa) of the control valve in a valve-regulated lead-acid rechargeable battery of the oxygen gas absorption type.

In the lead-acid rechargeable battery 10, the control valve section 21 is opened by the internal pressure of the battery being raised due to oxygen and hydrogen gases generated within the battery upon overcharge, thereby causing a ventilating passage to be formed from the vent hole 22 provided on one end to the ventilating openings 28 provided on the other end. The oxygen and hydrogen gases are emitted from the inside of the battery c through the control valve section 21 and the ventilating holes 12 to the outside of the battery d.

On the other hand, the control valve section 21 is closed upon typical charging or discharging, so that an electrolyte mist resulting from a gas generated upon charging inside the battery c or an electrolyte mist caused by vibrations acting upon the lead-acid rechargeable battery is not easily expelled to the outside of the battery d. Additionally, the gas (mainly air) inside the battery c is in contact with the electrolyte 19, and thus contains a greater amount of water when compared with the outside air present outside the battery d. Since such a gas inside the battery c is also not replaced with the outside air present outside the battery d, the loss of electrolyte which was produced in the conventional liquid-type lead-acid rechargeable battery can be prevented.

Additionally, since the electrode plate is soaked in the electrolyte, there will be no oxidation on the negative electrode plate as occurs in the lead-acid rechargeable battery of the negative electrode absorption type with a limited amount of electrolyte, even when an oxygen gas enters from the outside of the battery d into the inside of the battery c. Accordingly, the control valve section 21 has only to be sealed to such an extent that it can prevent water vapor or electrolyte mist inside the battery c from being dissipated to the outside of the battery d.

Although there are various conceivable methods for installing the control valve section 21 in the cylindrical body 20, the outer diameter of the control valve section 21 can be set to be slightly larger than the inner diameter of the cylindrical body 20, so that the control valve section 21 is press fit into the cylindrical body 20. The portions of the cylindrical body 20 and the control valve section 21 to be brought into contact with the cylindrical body 20 may be formed of a synthetic resin material, such as polypropylene resin or polyethylene resin, having a resiliency suitable for fixation by press-fit.

Alternatively, a male screw may be formed on the outer circumference of the control valve section 21 while a female screw may be formed on the inner circumference of the cylindrical body 20, so that both are screwed together for the control valve section 21 to be installed in the cylindrical body. Note that it is also possible to use, as appropriate, a packing 2 for securing hermeticity or tightness between the liquid-inlet cap 13 and the lid 14.

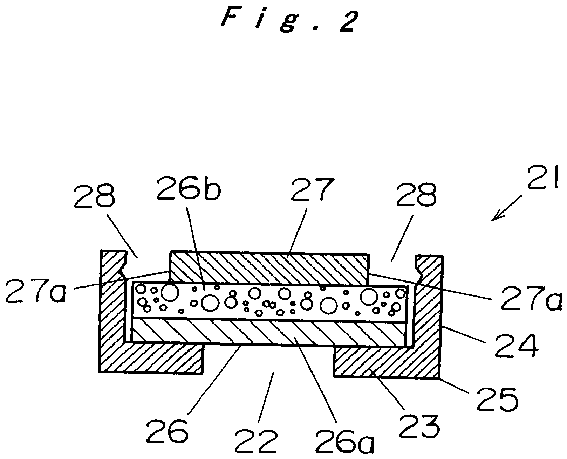

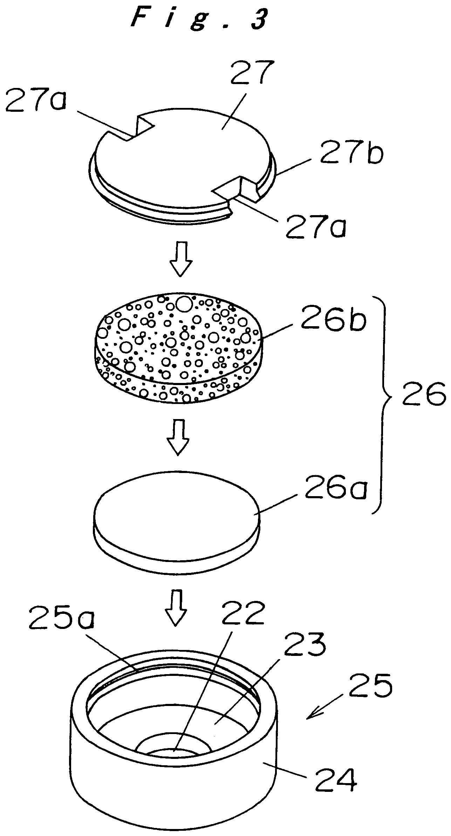

Now, with reference to Fig. 2, a detailed description will be made to the configuration of the control valve section 21 employed in this example. Fig. 2 is a cross-sectional view of the control valve section 21, and Fig. 3 is an exploded view illustrating each component of the control valve section 21. Note that the control valve section 21 is incorporated into not only the first example but also second to sixth examples, discussed later.

The control valve section 21 includes a valve storage assembly 25 which is formed of a bottom wall 23 having the vent hole 22 and a side wall 24 provided around the bottom wall 23; a valve assembly 26 disposed to cover the vent hole 22 inside the valve storage assembly 25; and a retainer plate 27 disposed on the valve assembly 26 and having part thereof joined to the side wall 24.

The valve assembly 26 has resiliency in the direction of its thickness, so that the retainer plate 27 brings the vent hole 22 and the surface of the valve assembly 26 into intimate contact with each other. Additionally, there is formed a vent notch 27a at a portion of the retainer plate 27 to provide the ventilating openings 28.

An increase in pressure inside the battery c would cause the valve assembly 26 to be compressed due to the internal pressure, thereby developing a gap between the bottom wall 23 around the vent hole 22 and the valve assembly 26. Thus, a ventilating passage is formed between the vent hole 22 and the ventilating openings 28, i.e., between the top surface and the bottom surface of the control valve section 21. A gas remaining inside the battery c is dissipated to the outside of the battery b through the ventilating passage, thereby causing the internal pressure of the battery to be reduced and the intimate contact between the valve assembly 26 and the bottom wall around the vent hole 22 to be restored.

The valve assembly 26 has resiliency in the direction of its thickness and is formed of an acid-resistant raw material, for example, chloroprene rubber, silicone rubber, fluorocarbon rubber, or EPDM rubber. Additionally, since the valve assembly 26 has only to be resilient in the direction of its thickness as a whole, the entire valve assembly 26 can be formed of these rubber materials.

Additionally, the valve assembly 26 can be made up of a valve plate 26a and an elastic body 26b, which are separate from each other. The valve plate 26a and the elastic body 26b can be formed of the aforementioned rubbers, and the elastic body 26b can also be formed of a foam rubber. It is particularly preferable to employ a separate foam rubber since its resiliency is less degraded with time.

Alternatively, the valve plate 26a may be formed of a polyethylene sheet or a high hardness rubber plate, which is not rich in resiliency, and the elastic body 26b of a foam rubber or the like, which is rich in resiliency, may be stacked on top thereof. The valve plate 26a and the elastic body 26b may also be bonded to each other.

Additionally, the bottom wall 23 and the valve assembly 26 may stick to each other. To prevent such sticking, a liquid lubricant such as a silicone oil or fluorocarbon oil is applied to these contact surfaces, as required.

To secure the side wall 24 and the retainer plate 27, a fitting projection 27b can be formed on the outer circumference of the retainer plate 27 and a fitting recess 25a formed on the side wall 24, so that the projection 27b is fit into the recess 25a. Alternatively, the side wall 24 and the retainer plate 27 can also be formed of a thermoplastic resin, so that they are fixed to each other by heat welding.

Note that in the illustrated example, the retainer plate 27 is provided with the notch 27a to provide the ventilating openings 28, but may also be provided with a through hole so long as it serves as a ventilating opening. However, provision of a through hole would require drilling in a subsequent step or alternatively molding to form the through hole, in the case of which burrs caused by the molding would clog the through hole, thus requiring an additional inspection step for eliminating them. For this reason, the notch 27a would be much easier and more preferable to form.

The aforementioned configuration of the control valve section 21 employs the valve assembly 26 in the shape of a plate. This allows for reducing the thickness of the control valve section 21, thereby effectively realizing the downsizing of the liquid-inlet cap 13 and reduction in costs thereby.

### (Second example)

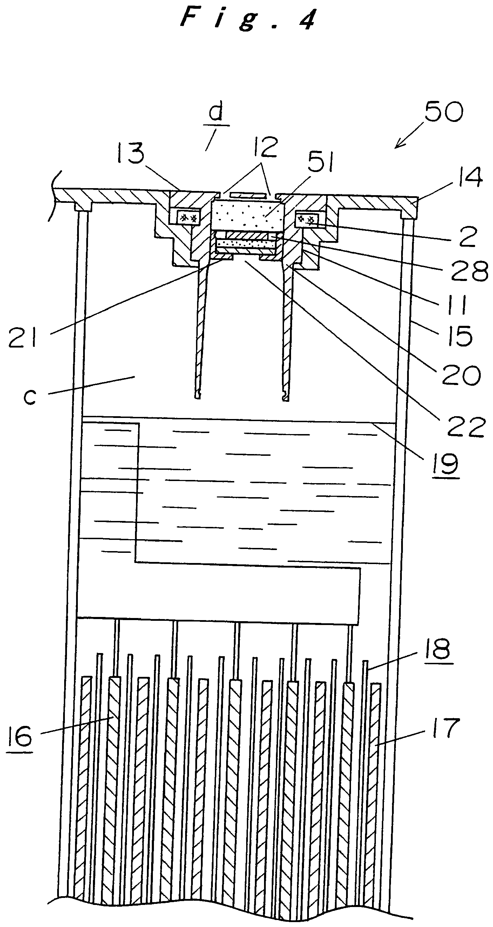

Fig. 4 is a cross-sectional view illustrating the main portion of a liquid-type lead-acid rechargeable battery 50 according to a second example. Note that the same components as those of the aforementioned example are indicated with the same reference symbols, and a detailed description will be made only to the main points of difference therebetween. The lead-acid rechargeable battery 50 of the second example is characterized in that a breathable porous filter 51 is disposed in the path between the ventilating holes 12 and the control valve section 21 in the cylindrical body 20 of the liquid-inlet cap 13.

The porous filter 51 can prevent foreign substances such as dust or sand particles from falling from the outside of the battery into the control valve section 21 to stabilize the opening operation of the control valve. Furthermore, when a flame or an electric spark occurring outside the battery d has caused an oxygen or hydrogen gas present around the vent hole 22 to catch fire, the flammable flame may reach the control valve section 21 to damage the control valve section. In such a case, provision of the porous filter 51 can prevent the flammable flame from reaching the control valve section 21, thereby preventing the flammable flame from damaging the control valve section.

Note that the pore diameter of the porous filter 51 may be determined in consideration of clogging due to foreign substances such as dust or sand particles, an effect of preventing flammable flames from passing therethrough, and the rates of transmission of oxygen and hydrogen gases therethrough. For example, the pores may have an average diameter of several tens to several hundreds of micrometers. The porous filter 51 can be formed of alumina powder, powder of polyethylene or polypropylene resin, or copolymer powder of these resins, which is sintered and made water-repellent, as required.

The porous filter 51 may have the shape of a disc of generally the same diameter as that of the control valve section 21. The porous filter 51 may be installed in the cylindrical body 20, and then the control valve section 21 is fixedly installed within the cylindrical body 20. In such an arrangement, the control valve section 21 preferably serves as a securing member for preventing the porous filter 51 from dislodging from the cylindrical body 20, thereby eliminating the need for additionally securing the porous filter.

Furthermore, the porous filter 51 can be fixed in advance onto the aforementioned retainer plate 27 by bonding, welding or the like.

### (Third example)

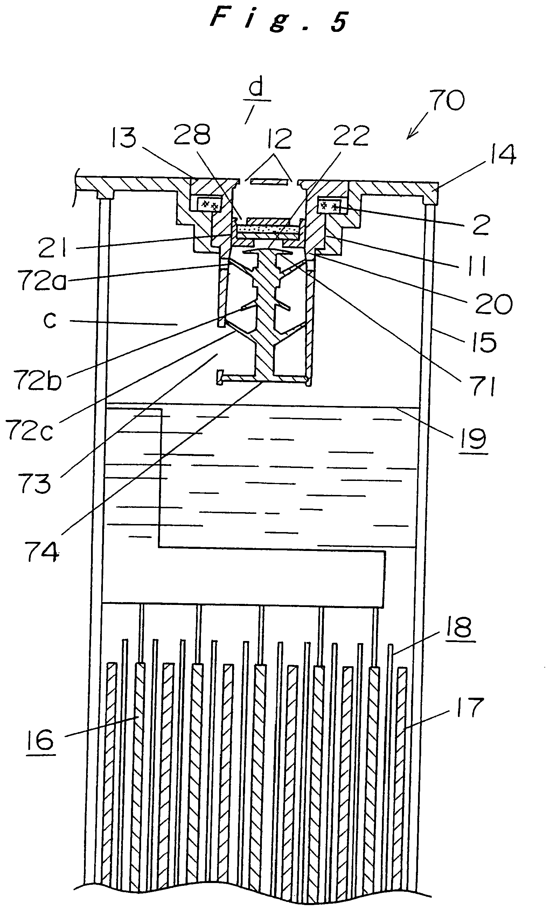

Fig. 5 is a cross-sectional view of a lead-acid rechargeable battery 70 according to a third example. Note that the same components as those of each of the aforementioned examples are indicated with the same reference symbols, and a detailed description will be made only to the main points of difference therebetween. The lead-acid rechargeable battery 70 according to the third example is characterized in that a splash-proof plate 71 is disposed opposite to the vent hole 22 inside the cylindrical body 20.

Unlike the valve-regulated lead-acid rechargeable battery having almost no electrolyte liberated from a set of electrode plates, the lead-acid rechargeable battery 70 according to the third example has the electrode surfaces which are entirely soaked in an electrolyte. Thus, application of vibrations to the battery would rock the electrolyte surface, thereby possibly causing the electrolyte to adhere to the control valve section 21. In such a case, the opening operation of the control valve section 21 may possibly be inhibited. That is, the sulfuric acid content in the electrolyte causes the valve assembly 26 to stick to the bottom wall 23, resulting in the valve-opening pressure being extraordinarily raised or the valve being stuck.

However, the configuration of the third example with the splash-proof plate 71 disposed below the control valve section 21 prevents the adhesion of the sulfuric acid to the control valve section 21. This preferably allows for preventing the valve assembly 26 and the bottom wall 23 from sticking to each other due to the sulfuric acid content in the electrolyte, thereby stabilizing the valve-opening pressure.
At the same time, it is also possible to prevent an electrolyte mist from rising to stay around the valve assembly 26, and thus prevent the electrolyte mist from being dissipated out of the battery when the valve is opened. This allows for further reducing the amount of electrolyte loss.

On the other hand, there are various conceivable methods for installing the splash-proof plate 71. As shown in Fig. 5, the splash-proof plate 71 may be installed such that a support column 75 is allowed to extend from a base portion 74, and a splash-proof member with the splash-proof plate 71 provided on the support column 75 is inserted into the cylindrical body 20, so that the base portion 74 is press fit into the inner wall of the cylindrical body 20.

Note that in addition to the splash-proof plate 71 opposite to the vent hole 22, tilt splash-proof plates 72a, 72b, and 72c, which are inclined, may also be effectively provided. Such inclined splash-proof plates serve to inhibit the electrolyte from going upwardly and allow the electrolyte that has already gone upwardly to flow back downwardly. The electrolyte having flown back downwardly is expelled from the liquid-inlet cap 13 through an aperture 73.

Note that in the illustrated example of Fig. 5, there are provided three pairs of tilt splash-proof plates; however, the number of plates can be increased or decreased as required. Note that the splash-proof plate 71 can be disposed in proximity to the vent hole 22, thereby preventing electrolyte loss resulting from the electrolyte mist being dissipated.

However, the splash-proof plate 71 disposed too close to the vent hole 22 would cause electrolyte drops, which have developed by electrolyte mist being condensed on the surface of the splash-proof plate 71, to adhere to the vent hole 22. It is thus necessary to provide a spacing between the splash-proof plate 71 and the vent hole 22 in consideration of the growth of the electrolyte drops. The size of electrolyte drops would vary depending on the specific gravity of the electrolyte, the presence of an additive (sulfuric acid sodium) in the electrolyte and its concentration, or the wettability of the splash-proof plate which may vary with the splash-proof raw material and its surface condition. It is thus necessary to define an appropriate spacing based on the pre-evaluation. The spacing typically defined may be approximately 0.5 mm to 1.0 mm.

According to the configuration of the third example, the control valve section 21 and the cylindrical body 20 are formed of separate parts, thereby allowing for making the cylindrical body interchangeable irrespective of the availability of the control valve structure. It is thus possible to reduce the unit parts costs and thus the manufacturing costs of the lead-acid rechargeable battery.

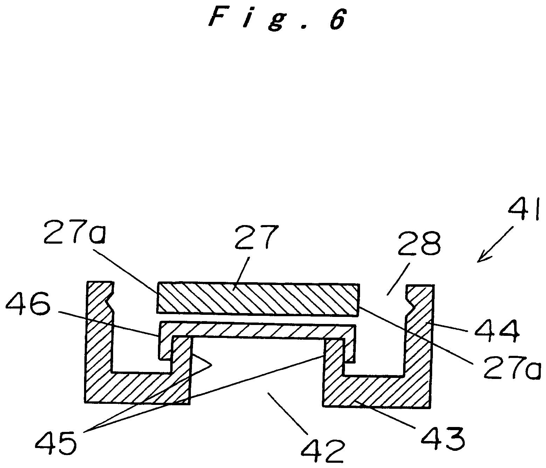

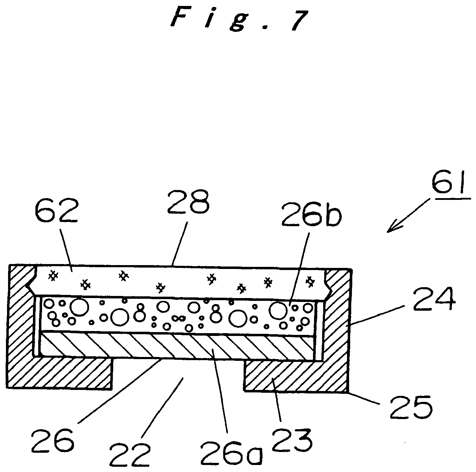

Now, with reference to Figs. 6 and 7, a description will be made to a control valve section 41 having another configuration and a control valve section 61 having still another configuration, both of which can be incorporated into the lead-acid rechargeable battery of the present invention. Note that these control valve section 41 and control valve section 61 are applicable to not only the first to third embodiments described above but also fourth to sixth embodiments, to be discussed later.

The control valve section 41 includes a bottom wall 43 having a vent hole 42; a side wall 44 provided around the bottom wall 43; a valve cylinder 45 protruded through the
aperture of the vent hole 42 in the same direction as the side wall 44 protrudes; a cap-shaped valve body 46 fitted over the valve cylinder 45; and a retainer plate 27 disposed above the top of the cap-shaped valve body 46 and having part thereof joined to the side wall 44. Note that the retainer plate 27 used here can be configured in the same manner as that of the control valve section 21 described above. Additionally, to prevent sticking, a liquid lubricant such as silicone oil or fluorocarbon oil is applied to the contact surfaces of the cap-shaped valve body 46 and the valve cylinder 45, as required.

The control valve section 41 that incorporates the cap-shaped valve body 46 would never use the elastic body 26b as used for the control valve section 21 described above. When the elastic body 26b is kept compressed for a long period of time, its repulsive force might be degraded, resulting in variations in adherence between the valve assembly 26 and the bottom wall 23. However, according to the control valve section 41, such variations in adherence and variations in valve-opening pressure caused thereby can be made less than those of the control valve section 21 described above.

However, since the control valve section 41 tends to be increased in thickness by the amount resulting from the provision of the valve cylinder 45, the configuration of the control valve section 21 would be preferably employed when the control valve section is desired to be reduced in thickness. Note that the valve assembly to be employed is not limited in shape to the plate-shaped one of the control valve section 21 or the cap-shaped one of the control valve section 41, but can be shaped in other configuration.

The control valve section 61 is characterized by employing a porous filter 62 as the retainer plate. In this case, the porous filter 62 has the explosion-proof and dustproof function of the porous filter 51 in the second example and the function of the retainer plate 27 for retaining the valve assembly, thus eliminating the need for providing them individually. This very preferable structure realizes a lower parts count and thereby remarkable cost reduction.

Note that in this case, one like the porous filter 51 can be employed as the porous filter 62. Additionally, since the porous filter 62 itself has air permeability, it is not necessary to provide the notch 27a which is formed in the retainer plate 27 to define a ventilating passage therethrough. Additionally, in this case, the outside of the porous filter 62 serves as the ventilating openings 28.

### (Example 1)

An inventive effect according to the first to third examples described above is that manufacturing costs can be reduced by making the aforementioned cylindrical body interchangeable. In particular, the third example makes it possible to prevent an electrolyte mist from rising to stay around the control valve section 21 (41 or 61), and thus prevent the electrolyte mist from being dissipated out of the battery when the valve is opened. This provides an effect of further reducing the amount of electrolyte loss. In relation to Example 1, this effect will be described.

The lead-acid rechargeable batteries (startup lead-acid rechargeable batteries of 55B24 type as specified in JIS D5301) according to the following comparative examples and inventive examples were prepared. Assuming to be used for vehicles, the lead-acid rechargeable batteries were subjected to charging and discharging while vibrations were being applied thereto, to evaluate the amount of electrolyte loss.

### (Comparative example battery A)

Comparative example battery A is constructed such that the control valve section 21 is eliminated in the lead-acid rechargeable battery 10 of the first example shown in Fig. 1.

### (Comparative example battery B)

Comparative example battery B is constructed such that the splash-proof plate 71 having the shape shown in Fig. 5 is installed in the cylindrical body of the liquid-inlet cap in Comparative example battery A.

### (Inventive example battery C)

Inventive example battery C is the lead-acid rechargeable battery according to the first example shown in Fig. 1 and Fig. 2.

### (Inventive example battery D)

Inventive example battery D is the lead-acid rechargeable battery according to the third example shown in Fig. 5.

With none of each of the aforementioned test batteries including the porous filter 51, the amount of their electrolyte loss was evaluated under the following test conditions.

### Test temperature: 75 degrees C

Vibration conditions: Up and down directions with application of sweep vibration (Vibration frequency 5 Hz to 40 Hz for 5 minutes)

### Acceleration: 1G

Charge and discharge conditions: 25A*1 minute for discharging and 14.8V*10 minutes for charging (with maximum charging current 25A)

The aforementioned charge and discharge cycle was repeated 4,320 cycles and then the amount of electrolyte loss was measured. In the measurement of the amount of electrolyte loss, water was replenished every week (every 480 cycles) up to the upper limit line (Line B of Fig. 1 which agrees with the electrolyte surface level at the start of the test). Note
that water was further replenished when the electrolyte surface fell below the lower limit line (Line A of Fig. 1 which agrees with the strap 1 upper surface level) within a week. With each test battery, the total amount of water replenished during 4320 cycles was determined to be the amount of electrolyte loss. The results of measurements of the amount of electrolyte loss are shown in Table 1.

**[Table 1]**

| Battery symbol | Amount of Electrolyte loss (L) | Remarks |
|---|---|---|
| A | 1.54 | Comparative example |
| B | 1.48 | Comparative example |
| C | 0.72 | Inventive example |
| D | 0.42 | Preferred inventive example |

From the results shown in Table 1, it can be seen that Inventive example batteries C and D provide a remarkable effect of retarding the amount of electrolyte loss when compared with Comparative example batteries A and B. Additionally, the effect of the splash-proof plate 71 is produced by Inventive example battery D better than Comparative example battery B. Provision of both the splash-proof plate 71 and the control valve section 21 (41 or 61) can provide a synergistic effect. With Comparative example batteries A and B, the vibrations caused electrolyte mist or water vapor in the battery to be comparatively easily dissipated out of the battery, resulting in the amount of electrolyte loss being increased.

On the other hand, in Inventive example batteries C and D, the control valve section 21 (41 or 61) prevented electrolyte mist or water vapor from being dissipated out of the battery. In particular, Inventive example battery D provided with the splash-proof plate 71 allows electrolyte mist to be adhered to the splash-proof plate 71 and condensed and flow back downwardly in the battery, thereby providing a very good effect of preventing electrolyte loss.

Now, a description will be made to fourth to sixth examples.

### (Fourth example)

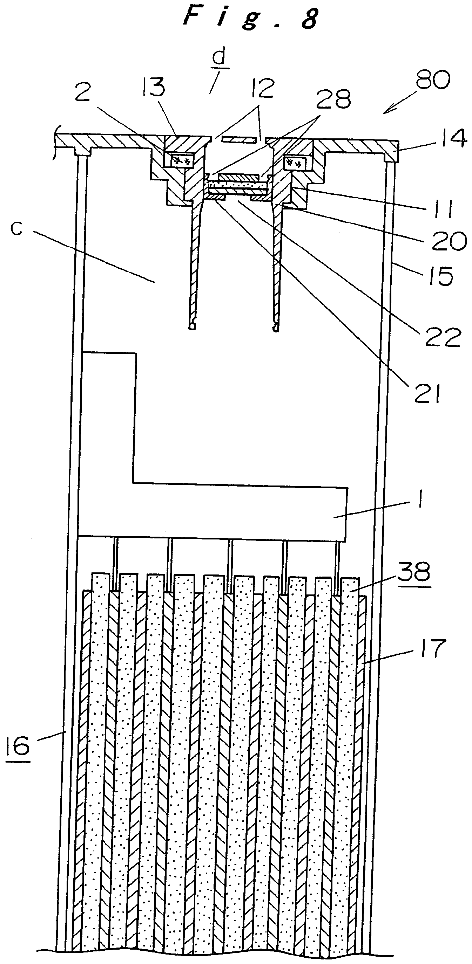

Fig. 8 is a cross-sectional view illustrating the main portion of a valve-regulated lead-acid rechargeable battery 80 according to a fourth example. Note that the same components as those of each of the aforementioned examples are indicated with the same reference symbols, and a detailed description will be made only to the main points of difference therebetween.

The positive electrode plate 16, the negative electrode plate 17, and a separator 38, which are housed in a battery jar 15 of the lead-acid rechargeable battery 80, are laden with an electrolyte that is composed of dilute sulfuric acid as a main ingredient. The negative electrode plate 17 is exposed out of the electrolyte, so that the negative electrode plate 17 absorbs an oxygen gas generated on the positive electrode plate 16 upon charging.

Note that in the example shown in Fig. 8, the entire electrolyte is absorbed in the positive electrode plate 16, the negative electrode plate 17, and the separator 38, so that there is no electrolyte liberated from both the positive and negative electrode plates and the separator.

Note that the separator 38 needs to absorb and retain the electrolyte and is thus formed of a fibrous mat, such as a polypropylene resin fiber mat or glass fiber mat, which is capable of absorbing and retaining the electrolyte. For example, in the case of glass fiber mats, a glass fiber mat of a fiber diameter of 0.1 to 10 [micro]m can be used which has been conventionally employed for the valve-regulated lead-acid rechargeable battery.

Likewise the aforementioned examples, the lead-acid rechargeable battery 80 is configured such that the control valve section 21 is installed inside the cylindrical body 20 of the liquid-inlet cap 13, in which the control valve section 21 is provided separately from the cylindrical body 20 and responds to the internal pressure of the battery to form (open) a ventilating passage from the vent hole 22 provided on one end to the ventilating openings 28 provided on the other end.

In this embodiment, since the control valve section 21 is provided separately from the cylindrical body 20, the cylindrical body 20 is thus interchangeable with a liquid-inlet cap which does not have the control valve section 21. Furthermore, the liquid-inlet cap with the control valve section is manufactured without the need for a special cylindrical body, thereby allowing for manufacturing the lead-acid rechargeable battery at drastically reduced costs. It is also possible to reduce the workload for parts stock control.

Note that as with the conventional valve-regulated lead-acid rechargeable battery, the valve-opening pressure of the control valve section 21 may be set within such a range (approximately 10 kPa to 20 kPa) that allows an oxygen gas generated on the positive electrode plate to be absorbed in the negative electrode plate and causes no deformation of the casing due to the internal pressure of the battery.

In the lead-acid rechargeable battery 80, overcharging with a large current or the like may cause the rate of producing an oxygen gas on the positive electrode plate to significantly exceed the rate of absorbing the gas on the negative electrode plate, so that the internal pressure of the battery reaches the valve-opening pressure of the control valve section 21. At this point in time, the control valve section 21 is opened to form the ventilating passage from the vent hole 22 provided on one end to the ventilating openings 28 provided on the other end. The oxygen and hydrogen gases are expelled from the inside of the battery c to the outside of the battery d through the control valve section 21 and the ventilating holes 12.

Emission of the oxygen and hydrogen gases causes the internal pressure of the battery to reduce down to the valve closing pressure of the control valve section 21, at the point in time of which the valve is closed and the ventilating passage is also closed. Note that the valve-closing pressure is defined to be equal to or less than the valve-opening pressure and greater than at least 0 kPa, like that of the conventional valve-regulated lead-acid rechargeable battery.

Additionally, as with the first to third examples, the control valve section 21 is installed in the cylindrical body 20 in a manner such that the outer diameter of the control valve section 21 is defined to be slightly larger than the inner diameter of the cylindrical body 20, so that the control valve section 21 is press fit into the cylindrical body 20. The portions of the cylindrical body 20 and the control valve section 21 to be brought into contact with the cylindrical body 20 may be formed of a synthetic resin material, such as polypropylene resin or polyethylene resin, having a resiliency suitable for fixation by press-fit.

Alternatively, as with each example described above, a male screw may be formed on the outer circumference of the control valve section 21 while a female screw may be formed on the inner circumference of the cylindrical body 20, so that both are screwed together for the control valve section 21 to be installed in the cylindrical body. Note that it is also possible to use, as appropriate, a packing 2 for securing hermeticity or tightness between the liquid-inlet cap 13 and the lid 14.

Note that in the example the lead-acid rechargeable battery 80 incorporates the control valve section 21 described in relation to Figs. 2 and 3; however, it is also possible to employ, as appropriate, the control valve section 41 (see Fig. 6) and the control valve section 61 (see Fig. 7), discussed above.

### (Fifth example)

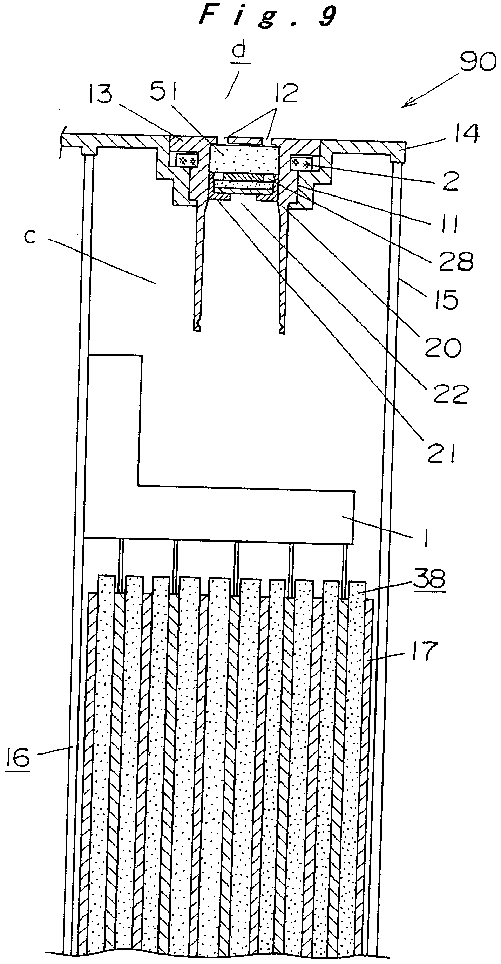

Fig. 9 is a cross-sectional view illustrating the main portion of a valve-regulated lead-acid rechargeable battery 90 according to the fifth example. Note that the same components as those of each of the aforementioned examples are indicated with the same reference symbols, and a detailed description will be made only to the main points of difference therebetween. The lead-acid rechargeable battery 90 is characterized by disposing the breathable porous filter 51 in the path between the ventilating holes 12 and the control valve section 21 inside the cylindrical body 20 of the liquid-inlet cap 13. Note that the fifth example can be combined with any of the control valve section 21, the control valve section 41, and the control valve section 61, described above; however, the following description will be directed to an example which incorporates the control valve section 21.

The porous filter 51 can prevent foreign substances such as dust or sand particles from falling from the outside of the battery into the control valve section 21, thereby stabilizing the opening operation of the control valve. Furthermore, when a flame or an electric spark occurring outside the battery d has caused an oxygen or hydrogen gas present around the vent hole 22 to catch fire, the flammable flame may reach the control valve section 21 to damage the control valve section. In such a case, provision of the porous filter 51 can prevent the flammable flame from reaching the control valve section 21, thereby preventing the flammable flame from damaging the control valve section.

Note that the pore diameter of the porous filter 51 may be determined in consideration of clogging due to foreign substances such as dust or sand particles, an effect of preventing flammable flames from passing therethrough, and the rates of transmission of oxygen and hydrogen gases therethrough. For example, the pores may have an average diameter of several tens to several hundreds of micrometers. The porous filter 51 can be formed of alumina powder, powder of polyethylene or polypropylene resin, or copolymer powder of these resins, which is sintered and made water-repellent, as required.

The porous filter 51 may have the shape of a disc of generally the same diameter as that of the control valve section 21. The porous filter 51 may be installed in the cylindrical body 20, and then the control valve section 21 is fixedly installed within the cylindrical body 20. In such an arrangement, the control valve section 21 preferably serves as a securing member for preventing the porous filter 51 from dislodging from the cylindrical body 20, thereby eliminating the need for additionally securing the porous filter.

Furthermore, the porous filter 51 can be fixed in advance onto the retainer plate 27 of the control valve section 21 by bonding, welding or the like.

### (Sixth example)

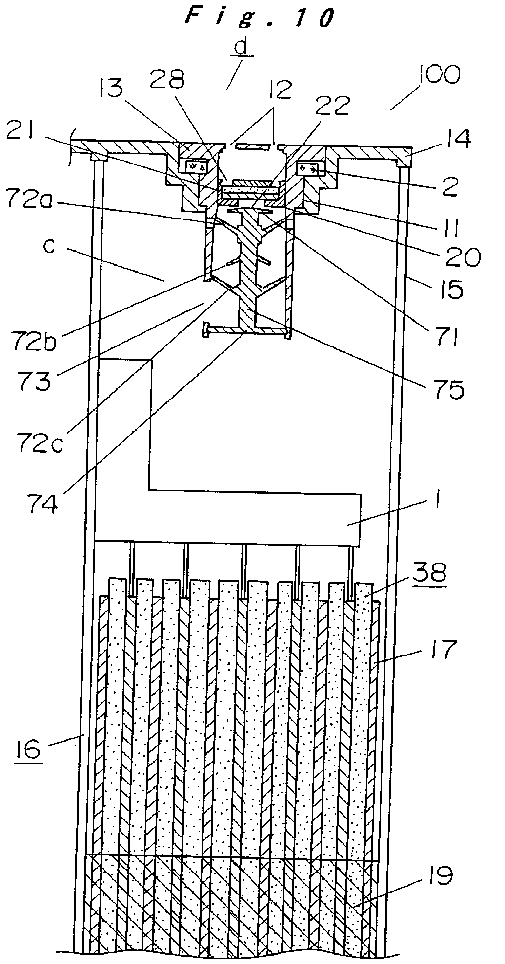

Fig. 10 is a cross-sectional view of a lead-acid rechargeable battery 100 according to a sixth example. Note that the same components as those of each of the aforementioned examples are indicated with the same reference symbols, and a detailed description will be made only to the main points of difference therebetween. The lead-acid rechargeable battery 100 is characterized by disposing the splash-proof plate 71 opposite to the vent hole 22 inside the cylindrical body 20, and by having an electrolyte 19 liberated from the positive electrode plate 16, the negative electrode plate 17, and the separator 38. Note that the sixth example can be combined with any of the control valve section 21, the control valve section 41, and the control valve section 61; however, Fig. 10 shows an example which incorporates the control valve section 21.

Unlike the valve-regulated lead-acid rechargeable battery with almost no electrolyte liberated from a set of electrode plates, the sixth example is configured such that part of the positive electrode plate 16 and the negative electrode plate 17 are soaked in the free electrolyte 19, and the remaining part is exposed above the electrolyte 19.

In such an arrangement, the exposed portion of the negative electrode plate 17 above the electrolyte 19 is subjected to an oxygen gas absorption reaction. Additionally, when compared to a battery with no electrolyte liberated from both the positive and negative electrode plates and the separator, this battery can make a larger amount of electrolyte available. It is thus possible to provide a valve-regulated lead-acid rechargeable battery which has a good high-temperature durability and low-temperature discharge characteristics.

On the other hand, in the presence of the free electrolyte, application of vibrations to the battery would rock the electrolyte surface, thereby causing the electrolyte to adhere to the control valve section 21.

In such a case, the opening operation of the control valve section 21 may possibly be inhibited. That is, the sulfuric acid content in the electrolyte may cause the valve assembly 26 to stick to the bottom wall 23, resulting in the valve-opening pressure being extraordinarily raised or the valve being stuck. To be worse, a large amount of adhesion of electrolyte would degrade the hermeticity of the control valve section.

However, as described in relation to the third example, the arrangement according to the sixth example prevents the adhesion of the sulfuric acid to the control valve section 21. This preferably allows for preventing the valve assembly 26 and the bottom wall 23 from sticking to each other due to the sulfuric acid content in the electrolyte, thereby stabilizing the valve-opening pressure. At the same time, the presence of the free electrolyte makes it possible to provide both the effects of improving the high-temperature durability and the low-temperature discharge characteristics.

Note that the splash-proof plate 71 can be disposed in the same manner as described in relation to the third example. It is thus possible to provide the tilt splash-proof plates 72a, 72b, and 72c, which are inclined, in addition to the splash-proof plate 71 disposed opposite to the vent hole 22. Note that the number of tilt splash-proof plates employed then can be increased or decreased as required.

### (Example 2)

An inventive effect according to the fourth to sixth examples described above is that manufacturing costs can be reduced by making the aforementioned cylindrical body interchangeable. In particular, the sixth example has an effect of remarkably preventing the adhesion of the electrolyte to the control valve section 21 (41 or 61) and variations in operating valve pressure of the control valve caused thereby, which would otherwise occur when an arrangement with free electrolyte is employed for the purpose of improving high-temperature durability and low-temperature discharge characteristics.

The following valve-regulated lead-acid rechargeable batteries (startup lead-acid rechargeable batteries of 55B24 type as specified in JIS D5301) according to the inventive examples were prepared. Assuming to be used for vehicles, the lead-acid rechargeable batteries were subjected to charging and discharging while vibrations were being applied thereto, and then the batteries were left out of service. Then, measurements were made on the initial valve-opening pressure of the control valve before the start of the charging and discharging and on the valve-opening pressure of the control valve after the battery has been left out of service.

Additionally, a measurement was also made on the discharge duration time of a pre-test battery when it was discharged with 300 A at -15 degrees C (ended up with a voltage of 5.0 V).

### (Inventive example battery E)

Inventive example battery E is the lead-acid rechargeable battery 80 according to the first example.

### (Inventive example battery F)

Inventive example battery F is constructed such that the splash-proof plate 71 having the shape shown in Fig. 10 is installed in the cylindrical body of the liquid-inlet cap in Inventive example battery E.

### (Inventive example battery G)

Inventive example battery G is constructed such that the lead-acid rechargeable battery 80 according to the first example is replenished with an electrolyte, and the lower portion of the positive electrode plate and negative electrode plate corresponding to 50% of their height is soaked in free electrolyte.

### (Inventive example battery H)

Inventive example battery H is the lead-acid rechargeable battery 100 according to the sixth example shown in Fig. 10, with the lower portion of the positive electrode plate and negative electrode plate corresponding to 50% of their height being soaked in free electrolyte.

With none of each of the aforementioned test batteries including the porous filter 51, the initial valve opening and closing pressures were measured, and then charging and discharging were carried out under the following conditions while vibrations were being applied continuously to the batteries. Then, the batteries were left out of service for seven days at an ambient temperature of 60 degrees C, and thereafter, the valve opening and closing pressures were measured.
Test temperature: 75 degrees C
Vibration conditions: Up and down directions with application of sweep vibration (Vibration frequency 5 Hz to 40 Hz for 5 minutes)
Acceleration: 1G
Charge and discharge conditions: 480 charge and discharge cycles with 25 A × 1 minute for discharging and 14.8 V × 10 minutes for charging (with maximum charging current 25 A)

The results of the aforementioned measurements on the valve-opening pressure and the results of low-temperature high-rate discharge tests are shown in Table 2. Note that for the low-temperature high-rate discharge test, the percentage to the discharge duration time of Battery A was employed. Additionally, for the valve-opening pressure value, the maximum value, average value, and minimum value of n=12 measurements were determined.

**[Table 2]**

| Battery symbol | | Valve opening pressure (kPa) | | Discharge duration time (%) | Remarks |
|---|---|---|---|---|---|
| | | Initial state | After charge/discharge & left out of service | | |
| E | Maximum | 12.2 | 12.6 | 100 | Inventive example |
| | Average | 11.0 | 11.8 | | |
| | Minimum | 10.2 | 10.8 | | |
| F | Maximum | 12.1 | 12.4 | 100 | Inventive example |
| | Average | 11.0 | 11.7 | | |
| | Minimum | 10.3 | 10.4 | | |
| G | Maximum | 12.2 | 14.2 | 140 | Inventive example |
| | Average | 11.1 | 12.7 | | |
| | Minimum | 10.1 | 9.6 | | |
| H | Maximum | 12.1 | 12.5 | 140 | Preferred inventive example |
| | Average | 11.0 | 11.7 | | |
| | Minimum | 10.2 | 10.3 | | |

From the results shown in Table 2, Inventive example battery G and preferred Inventive example battery H according to the sixth example are greatly increased in low-temperature high-rate discharge duration time due to the presence of free electrolyte when compared with Inventive example batteries E and F. In particular, Battery H equipped with the splash-proof plate 71 has variations in the valve-opening pressure reduced to the same level as those of Battery E and Battery F, and thus extremely low variations.

On the other hand, with Battery G, the amount of variation in the valve-opening pressure tended to be greater than that of the other batteries. This is thought to be due to the fact that the electrolyte was adhered to the control valve section 21 leading to variations in the valve-opening pressure. Therefore, to make free electrolyte available with particular emphasis on the low-temperature high-rate discharging characteristic, the sixth example is the most preferable.

A description will now be made to the present invention. Note that the same components as those of each of the aforementioned examples are indicated with the same reference symbols, and a detailed description will be made only to the main points of difference therebetween.

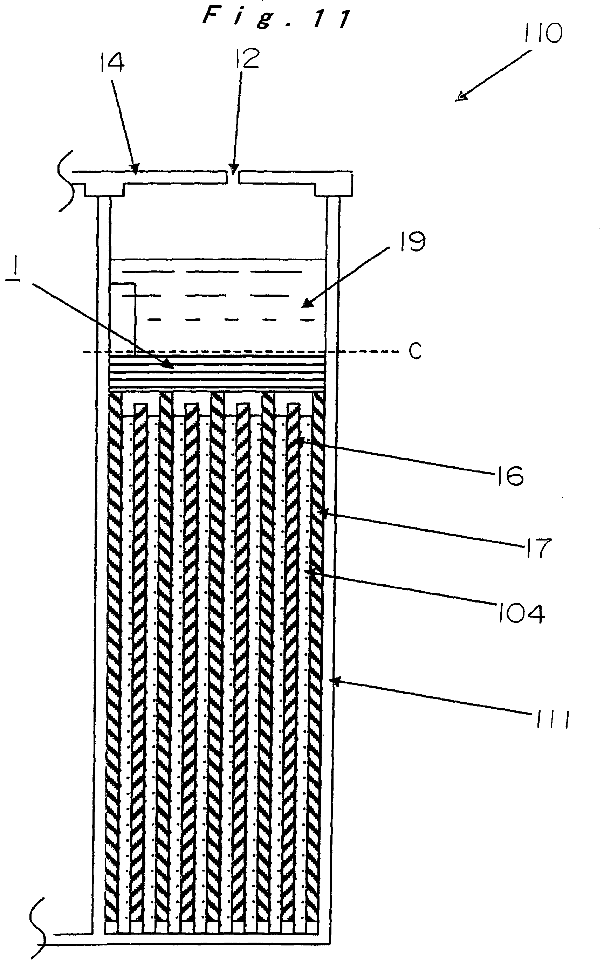

Fig. 11 is a partial cross-sectional view illustrating a basic exemplary configuration of a lead-acid rechargeable battery 110 according to the present invention. The lead-acid rechargeable battery 110 includes the positive electrode plate 16, the negative electrode plate 17, a mat separator 104 disposed between the positive electrode plate 16 and the negative electrode plate 17, and a positive electrode strap (not shown) and a negative electrode strap 1 for joining together the respective like-polarity ear portions of the positive electrode plate 16 and the negative electrode plate 17. Here, the positive electrode plate 16 and the negative electrode plate 17 include a grid assembly of a Pb-Ca alloy containing no Sb in order to prevent the loss of water in the electrolyte.

The lead-acid rechargeable battery 110 according to the present invention is in such an initial state, immediately before the service of the battery is started, in which at least the electrolyte 19 level (line C of Fig. 11) is set above the upper surface of the negative electrode strap 1 with the electrode surface of the negative electrode plate 17 entirely soaked in the electrolyte. The lead-acid rechargeable battery 110 according to the present invention is characterized in that a separator such as a polyethylene separator which is incapable of absorbing and retaining electrolyte therein and has been used in a conventional liquid-type lead-acid rechargeable battery is replaced with a mat-shaped separator 104 capable of absorbing and retaining electrolyte.

As the material of the mat separator 104, it is possible to use a glass mat which has been used in conventional valve-regulated lead-acid rechargeable batteries; a fibrous mat of acid-resistant olefin resin such as polyethylene or polypropylene resin; or a fibrous mat of polyester resin. The polyethylene or polypropylene resin has a lower electrolyte wettability when compared with glass fiber, and can be thus provided with an affinity for water such as by sulfonation in consideration of its surface wettability.

A detailed description will now be made to the operation of the lead-acid rechargeable battery 110 according to the present invention.

At the beginning of service, the lead-acid rechargeable battery 110 is initially arranged in the same manner as a typical liquid-type lead-acid rechargeable battery in terms of its electrolyte fill level. Let this initial state of service be State 1.

In State 1, the electrolyte is gradually lost via the ventilating holes 12, which are provided in either a battery jar 111 or the lid 14, due to the electrolysis of water in the electrolyte caused by charging during a typical step of service. Even when the electrolyte fill level is lowered causing the strap and electrode surface to be exposed above the electrolyte, no electrolyte is supplied to the electrode plate in a typical liquid-type lead-acid rechargeable battery. It is thus necessary to replenish the battery with water to the initial electrolyte fill level because the performance and safety of the battery would be otherwise compromised.

On the other hand, the lead-acid rechargeable battery 110 can be continually used because the mat separator 104 supplies the upper portion of the electrode plate with the electrolyte 19 even when the electrolyte level continues to lower causing the strap or the positive electrode plate 16 or the negative electrode plate 17 is exposed in a gas phase. It is to be understood that such a condition in which the electrode plate including the strap is exposed above the electrolyte 19 is defined as State 2. In State 2, the negative electrode gas absorption reaction is started on the upper portion of the set of electrode plates exposed above the electrolyte 19 in the same manner as the valve-regulated lead-acid rechargeable battery, thereby allowing the rate of water electrolysis reaction to be gradually lowered when compared with that in State 1.

The degree of reduction in the rate of water electrolysis reaction becomes greater as the exposed area of the electrode plate above the electrolyte 19 is increased and the gas absorption reaction rate on the negative electrode is increased, eventually resulting in an electrolyte loss rate being approximately zero. That is, the lead-acid rechargeable battery 110 serves as a liquid-type lead-acid rechargeable battery at the beginning of service (State 1), while serving as a negative electrode absorption type lead-acid rechargeable battery at the point in time at which the electrolyte 19 is reduced causing the electrode plate to be exposed above electrolyte surface (State 2). To switch from State 1 to State 2, the user is not required to perform any operation but the battery itself will automatically provide the switching.

Accordingly, when compared with the conventional liquid-type lead-acid rechargeable battery, the lead-acid rechargeable battery 110 according to the present invention can completely eliminate the need for replenishing water for a long period of time in a wide range of conditions.

Now, each of State 1 and State 2 mentioned above will be described in more detail.

As described above, in State 1, the lead-acid rechargeable battery 110 is arranged basically in the same manner as the liquid-type lead-acid rechargeable battery in terms of the electrolyte fill level. That is, the lead-acid rechargeable battery 110 can be designed in the same manner as a typical liquid-type lead-acid rechargeable battery because the internal pressure of the battery is the same as the atmospheric pressure all the time. To this end, it is not necessary to employ a special resin material of a high strength in consideration of the resistance to pressure of the battery jar 111 and the lid 14 and their joined portion as in the negative electrode absorption type lead-acid rechargeable battery in which the internal pressure of the battery may be reduced or increased. Also, it is not necessary to take special design requirements into account, for example, to increase the thickness of the battery jar 111 and the lid 14. Accordingly, when compared with the conventional valve-regulated lead-acid rechargeable battery of the negative electrode absorption type, the lead-acid rechargeable battery 110 can employ a more lightweight and inexpensive battery jar 111 and lid 14, thereby allowing the battery itself to be manufactured at lower costs.

Those conventional liquid-type lead-acid rechargeable batteries are now commercially available which feature the elimination of replenishment of water and thus have no liquid inlet for replenishing water. These batteries are typically configured to have a ventilating passage of a complicated labyrinthine structure which is disposed inside the lid and leads from the inside of the battery to the outside of the battery in order to prevent electrolyte loss due to evaporation of the electrolyte. The lead-acid rechargeable battery 110 can continually provide a stable battery performance by changing from State 1 to State 2, as described above, thereby eliminating the need of concerning about the evaporation of electrolyte water content during this time. It is thus not necessary to provide the aforementioned complicated labyrinthine structure within the lid.

Alternatively, provision of the aforementioned control valve section 21 (41 or 61) which secures a ventilating hole for making the internal pressure equal to the external pressure or which opens at a relatively low internal pressure may eliminate the need for a liquid-inlet cap for replenishing the electrolyte. Of course, assuming a case where the lead-acid rechargeable battery 110 having toppled over during its transportation requires replenishment of the electrolyte or water, a liquid-inlet cap with a ventilating hole may be installed therein instead of the ventilating holes 12 as with the conventional liquid-type lead-acid rechargeable battery.

As described in the foregoing, the lead-acid rechargeable battery 110 according to the present invention can facilitate its design and reduce costs when compared with the conventional valve-regulated lead-acid rechargeable battery of the negative electrode absorption type and the liquid-type lead-acid rechargeable battery which has a complicated labyrinthine structure provided in the lid to eliminate the need of replenishing water.

Lead-acid rechargeable batteries are employed mainly for vehicle applications. Among these applications, most of the lead-acid rechargeable batteries 110 which are used in a so-called private-use car or a car owned privately by a general consumer sustain the aforementioned State 1 until the end of its useful life without replenishment of water.

On the other hand, in comparison with the private-use car, a so-called business-use car such as taxis is more frequently used with their battery actually charged and discharged for a longer period of time. Thus, this may cause the electrolyte fill level to be lowered, thereby resulting in the negative electrode strap 1 or the negative electrode plate 17 being exposed above the electrolyte 19. In such a case, the lead-acid rechargeable battery 110 changes to State 2, initiating a gas absorption reaction on the negative electrode.

In State 2, the negative electrode strap 1 is exposed above the electrolyte 19. In particular, a negative electrode strap 1 formed of a Pb-Sb alloy would be corroded thereby causing a problem with the battery depending on the condition. The present invention foresees the use of a lead alloy containing no Sb, in particular a Pb-Sn alloy. Note that Sb is often contained in a Pb alloy as an unavoidable impurity. In this case, it is preferable to limit the Sb concentration in the Pb alloy to approximately 50 ppm or lower, at which no corrosion is caused.

When the electrolyte is further lost causing the upper portion of the negative electrode plate 17 to start to be exposed, the negative electrode gas absorption reaction begins at this portion thereby retarding the loss of the electrolyte. Eventually, the oxygen gas production reaction on the positive electrode and the gas absorption reaction on the negative electrode are balanced, leading to no loss of water by electrolysis (State 2).

With the lead-acid rechargeable battery 110 according to the present example, there had been a concern that in State 2, the negative electrode would be continually oxidized and degraded due to the oxygen flowing therein from the outside of the battery. However, it was found that such a concern was just an overcare when the lead-acid rechargeable battery is used for a vehicle application.

That is, when applied as described above for a vehicle or a private-use car that is used less frequently, the lead-acid rechargeable battery 110 comes to the end of its useful life
under State 1, never under State 2 in most cases, with the rate of electrolyte loss being low and the battery requiring almost no replenishment of water until the end of its useful life.

On the other hand, most batteries used under State 2 are limited to those for the aforementioned business-use cars which are more frequently used; the business-use cars use the batteries much more frequently when compared with private-use cars. Accordingly, in the period of time until the battery reaches the end of its useful life, the battery changes to State 2 in which the electrolyte 19 is reduced to expose the electrode plates 16 and 17 above the electrolyte 19, thereby allowing an oxygen gas absorption reaction to take place on the negative electrode plate 17.

However, the business-use car uses the lead-acid rechargeable battery 110 very frequently, so that it is in a charging state for a long period of time but in an out-of-service state (in which the vehicle is not used) for a very short period of time during which an oxygen gas flows from the outside of the battery into the battery. The typical valve-regulated lead-acid rechargeable battery has a problem that the negative electrode plate is oxidized and degraded due to the oxygen flowing into the battery while it is left out of service. However, in most cases, it was found that such a problem would not occur and was not necessary to take into account.

However, when it is desired to more strictly prevent the negative electrode plate 17 from being degraded due to external oxygen, it is also possible to add, instead of the liquid-inlet cap 13, the control valve section 21 (41 or 61) which can prevent the entry rate of external oxygen and release the internal pressure of the battery. In this case, the valve-opening pressure of the control valve section 21 (41 or 61) is preferably set at a value lower than the setting value (10 kPa to 20 kPa) that is provided to the conventional valve-regulated lead-acid rechargeable battery of the negative electrode absorption type. The valve-opening pressure setting that is used by the typical valve-regulated lead-acid rechargeable battery is employed because the resistance to pressure of the battery jar 111 and the lid 14 and their joined portion has to be taken into account due to an increase in the internal pressure of the battery.

However, with the lead-acid rechargeable battery 110 according to the present invention that is rich in the electrolyte 19, a slight expansion of the battery jar 111 caused by the internal pressure and a decrease in electrode plate group pressure resulting therefrom would not significantly affect the characteristics of the battery. Accordingly, even with the valve-opening pressure being set within a conventional range of 10 kPa to 20k Pa, it is possible to provide a greater deformation tolerance for the battery jar and thus use a more inexpensive battery jar 111 and lid 14 when compared with the valve-regulated lead-acid rechargeable battery of the negative electrode absorption type.

On the other hand, the control valve section 21 (41 or 61) having a low valve-opening pressure below 10 kPa prevents electrolyte mist or the vapor laden with water in the electrolyte from being dissipated out of the battery, and thus very effective for preventing the electrolyte 19 from being lost due to them. Additionally, since the internal pressure is below 10 kPa, the deformation of the battery jar 111 and the lid 14 due to the internal pressure is not so seriously cared about. This is also effective to prevent the overflow of the electrolyte 19 caused by the battery being toppled over during its transportation.

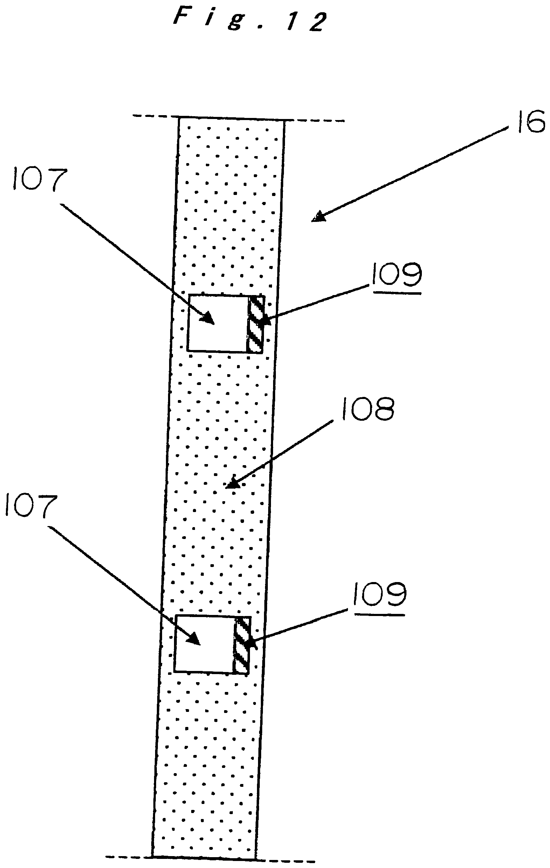

As illustrated in the cross section of the positive electrode plate 16 shown in Fig. 12, the lead-acid rechargeable battery 110 of the present invention is more preferably configured such that at least part of the surface of a positive electrode grid 107 in contact with a positive grid active material 108 is provided with a surface layer 109 formed of a Pb-Sn alloy that contains a concentration of Sn higher than that of Sn contained in the positive electrode grid or formed of a Pb-Sb alloy. The Sn or Sb that is contained in the surface layer 109 can improve the adherence between the positive electrode grid 107 and the positive active material 108 and improve the useful life of the battery. In particular, when the positive active material 108 tends to soften due to charging and discharging, this would noticeably increase the useful life of the battery in synergy with the capability of the mat separator 104 of retaining the active material.

Note that to enhance the corrosion resistance of the positive electrode grid 107, the positive electrode grid 107 may be doped with approximately 1.0 to 2.0 mass% of Sn. When the surface layer 109 is formed of a Pb-Sn alloy, employed is such a Pb-Sn alloy that has a concentration of Sn greater than that contained at least in the positive electrode grid base material. Provision of a surface layer of a Pb-Sn alloy having a concentration of Sn below that of Sn contained in the grid base material would reduce the concentration of Sn of the positive electrode grid surface, and is thus not preferable to improve its adherence to the active material. Note that the surface layer 109 can also be formed of a Pb-Sb-Sn alloy that contains both Sb and Sn, in the case of which a remarkable effect of improving the useful life of the battery can also be provided.

### (Example 3)

A detailed description will now be made to the features and effects of the lead-acid rechargeable battery 110 according to the present invention. The following Inventive example batteries were prepared to evaluate the 5 hour rate discharge capacity and the life expectancy of each battery.

### (Inventive example battery I)

A 55D23 type battery (12 V, 48 Ah) specified in JIS D5301 (startup lead-acid rechargeable battery) was prepared which includes five positive electrode plates 16 and six negative electrode plates 17 per one cell in combination with mat separators 104. The positive electrode plate 16 includes an expanded grid assembly which is formed of an alloy of 0.06 mass% of Pb and 1.60 mass% of Ca. The negative electrode plate 17 includes an expanded grid assembly which is formed of an alloy of 0.06 mass% of Pb, 0.20 mass% of Ca, and Sn. The mat separator 104 is formed of glass fiber of a fiber diameter of 0.5 [micro]m to 1.0 [micro]m to have a thickness of 1.0 mm when a pressure of 19.6 kPa is applied thereto.

The negative electrode strap 1 is formed of 5.0 mass% of Pb and Sn containing no Sb. The electrolyte 19 of a dilute sulfuric acid which has a specific gravity of 1.280 (reduced value at 20 degree C) was set at a point 25.0 mm above the upper surface of the negative electrode strap 1. The battery is denoted by Battery I. Note that the battery jar 111 used for Battery I is constructed such that the jar sidewall (narrower side) parallel to the electrode surface has a thickness of 2.0 mm and the jar sidewall (wider side) perpendicular to the electrode surface has a thickness of 2.0 mm. The battery jar 111 has a weight of 650 g.

### (Inventive example battery J)

Inventive example battery J is constructed such that Battery I mentioned above is provided in the lid 14 with a control valve section which opens in response to the internal pressure of the battery. The control valve section employed was configured such that a rubber plate was brought into resilient contact with a conventional known vent hole, and the valve-opening pressure was set at 8 kPa by adjusting the resilient contact force. Note that a resilient sponge body was secured by the top lid with the sponge body inserted therebetween on the rubber plate. At this time, it is possible to adjust the resilient contact force by the Young's modulus, thickness, and compressibility of the sponge body to be inserted.

### (Inventive example battery J')

Inventive example battery J' is Battery J with the valve-opening pressure of its valve structure adjusted to 15 kPa.

### (Inventive example battery K)

Inventive example battery K is Battery I configured such that the surface layer 109 of 5.0 mass% of Pb and Sn alloy in a thickness of 0.20 mm is pressed onto part of the surface of the positive electrode grid 107 in contact with the positive active material 108 to be thereby affixed to the grid body.

### (Inventive example battery L)

Inventive example battery L is Battery I configured such that a 5.0 mass% of Pb and Sb alloy in a thickness of 0.20 mm is pressed and thereby affixed to part of the surface of the positive electrode grid 107 in contact with the positive active material 108.

### (Inventive example battery L')

Inventive example battery L' is Battery I configured such that a 5.0 mass% of Pb, 5.0 mass% of Sb, and Sn alloy in a thickness of 0.20 mm is pressed and thereby affixed to part of the surface of the positive electrode grid 107 in contact with the positive active material 108.

### (Comparative example battery M)

Comparative example battery M is Battery I configured such that the negative electrode strap is formed of a 3.0 mass% of Pb and Sb alloy which is typically used in the conventional liquid-type lead-acid rechargeable battery.

### (Comparative example battery N)

Instead of the mat separator 104 used in Inventive example battery I, Comparative example battery N employs a sheet-like separator of microporous film composed mainly of polyethylene resin.

### (Comparative example battery O)

Comparative example battery O is configured such that the battery jar 111 and the lid 14 used for Inventive example
battery I were modified. The battery jar has a side wall of a thickness greater than that of the battery jar 111 used in Batteries I to N in order to prevent a battery jar expansion caused by an increase in the internal pressure and a decrease in group pressure resulting therefrom. Additionally, with this increase in thickness, the lid used was also molded to have a greater thickness at the contact portion with the battery jar.

Comparative example battery O is constructed such that the jar sidewall (narrower side) parallel to the electrode surface has a thickness of 3.5 mm and the jar sidewall (wider side) perpendicular to the electrode surface has a thickness of 2.5 mm. The battery jar 111 has a weight of 850 g. Note that the weight of the battery jar used for Inventive example batteries I to M is 650 g. It is thus found that its weight was significantly increased by increasing the thickness when compared with Inventive example batteries I to M. Furthermore, the lid includes a control valve section with a valve-opening pressure of 15 kPa.

Furthermore, Battery O is a valve-regulated lead-acid rechargeable battery of the negative electrode absorption type, configured such that its electrolyte has a specific gravity of 1.350 (reduced value at 20 degree C) and the amount of electrolyte is just enough to be absorbed by the active materials of the separator, the positive electrode, and the negative electrode, with almost no electrolyte liberated from the set of electrode plates being present within the battery.

### (Comparative example battery O')

Comparative example battery O' is Comparative example battery O configured to employ a battery jar which is less in weight and thickness than those used for Battery I to Battery N.

Each of the aforementioned batteries was evaluated in terms of the 5 hour rate discharge capacity, the life expectancy at an ambient temperature of 75 degree C with a tendency of overcharge (life test A), and the life expectancy at an ambient temperature of 40 degree C with deep charge and discharge (life test B). Each of the aforementioned test conditions is shown below.

### (5 hour rate discharge capacity)

The discharge duration time of each battery was measured in which its discharging voltage was reduced to 10.5 V at 25 degrees C with a 5 hour rate discharging current (9.6 A). Then, the 5 hour rate discharging current was multiplied by the discharge duration time, thereby determining the 5 hour rate discharge capacity.

### (Life test A)

In the life test A, each battery was repeatedly subjected at an ambient temperature of 75 degrees C to 480 charge and discharge cycles; each cycle including a 14.8 V constant voltage charging (with a maximum charging current of 25 A) for 10 minutes and a 25.0 A constant current discharging (25 A) for 2 minutes. After that, each battery was left out of service for 48 hours to be then subjected to a 300 A constant current discharging for 30 seconds, and thus the voltage was measured at 30 seconds after the discharge was started. The charge and discharge cycle and the 300 A constant current discharging were repeated until the voltage at 30 seconds after the start of discharge was dropped to 7.2 V.

Note that since the 300 A constant current discharging is carried out every 480 cycles, the number of cycles at which the voltage at 30 seconds after the start of discharge is 7.2 V was determined by linear extrapolation from the number of cycles at which the voltage at 30 seconds after the start of discharge was below 7.2 V, the very voltage at 30 seconds after the start of discharge, and the previous voltage at 30 seconds after the start of discharge obtained 480 cycles ago. The resulting value was given as the number of life cycles.

### (Life test B)

In the life test B, each battery was repeatedly subjected at an ambient temperature of 40 degrees C to 25 charge and discharge cycles under a condition of each cycle including a 14.8 V constant voltage charging (with a maximum charging current of 25 A) for 120 minutes and a 9.6 A constant current discharging for 60 minutes. After that, each battery was left out of service for 48 hours to be then subjected to a 300 A constant current discharging for 30 seconds, and thus the voltage was measured at 30 seconds after the discharge was started. The charge and discharge cycle and the 300 A constant current discharging were repeated until the voltage at 30 seconds after the start of discharge was dropped to 7.2 V.

Note that since the 300 A constant current discharging is carried out every 25 cycles, the number of cycles at which the voltage at 30 seconds after the start of discharge is 7.2 V was determined by linear extrapolation from the number of cycles at which the voltage at 30 seconds after the start of discharge was below 7.2 V, the very voltage at 30 seconds after the start of discharge, and the previous voltage at 30 seconds after the start of discharge obtained 25 cycles ago. The resulting value was given as the number of life cycles.

Table 3 shows the results of the aforementioned 5 hour rate discharge capacity, the life test A, and the life test B.

**[Table 3]**

| Battery | | 5 hour rate capacity (Ah) | Life cycle count | |
|---|---|---|---|---|
| | | | Life test A | Life test B |
| Inventive example | Battery I | 50.2 | 4400 | 450 |
| | Battery J | 50.1 | 4450 | 450 |
| | Battery J' | 50.2 | 4500 | 450 |
| | Battery K | 50.2 | 4600 | 47 |
| | Battery L | 50.3 | 4800 | 500 |
| | Battery L' | 50.2 | 4900 | 520 |
| Comparative example | Battery M | 50.2 | 4200 | 450 |
| | Battery N | 51.5 | 3200 | 200 |
| | Battery O | 42.5 | 2000 | 420 |
| | Battery O' | 41.2 | 1200 | 360 |

From the results shown in Table 3, it is found that Comparative example battery O and battery O' which have a limited amount of electrolyte, have a 5 hour rate discharge capacity about 15% less than that of Inventive example batteries I to M. The specified 5 hour rate capacity value of 55D23 in JIS standards is 48.0 Ah. Thus, Comparative example battery O and battery O' cannot satisfy the requirements in accordance with the standards.

On the other hand, Inventive example battery I, battery J, battery J', battery K, battery L, battery L', and battery M are found as follows in comparison with Comparative example battery N, i.e., a conventional liquid-type lead-acid rechargeable battery. That is, the electrolyte 19 in the mat separator 104 is diffused slower when compared with the sheet-like separator with a slight drop in capacity but only by about 3%. Thus the batteries satisfy the standards with their drop falling within the allowable range.

In the life test A, Comparative example battery O and battery O' which are a valve-regulated lead-acid rechargeable battery of the negative electrode absorption type, reached the end of their useful life at the earliest stage, i.e., at 2000 cycles (battery O) and 1200 cycles (battery O') because they were subjected to the test under a rigorous condition in which the oxygen gas generated on the positive electrode during charging was greater than the capacity of gas absorption reaction on the negative electrode. In particular, Battery O' which uses the same thin and lightweight battery jar as that of Inventive example batteries I to M reached the end of its useful life at an extremely early stage. This is because the battery jar was expanded due to the expansion of the set of electrode plates which results mainly from the deformation of the positive electrode, thereby causing the electrode plate and the separator not to be in close contact with each other and thus spaced apart from each other.

With Comparative example battery N, the life test was ended at 3200 cycles, at which the electrode plate was exposed above the electrolyte and at the same time, the voltage at 30 seconds after the start of discharge suddenly dropped.

All of Inventive example batteries I to M reached more than 4000 cycles in the life test A, thus exhibiting a significantly longer useful life than Comparative example batteries N to O'. Additionally, with Inventive example batteries I to M, the electrode plate was exposed above the electrolyte 19 during the test. However, unlike Comparative example battery N, it is thought that the mat separator 104 wetted the negative electrode plate surface with the electrolyte 19, thereby somewhat preventing oxidation due to oxygen in the outside air.

On the other hand, Inventive example battery J and battery J' are different from each other only in the valve-opening pressure of the control valve section. When compared with Battery J having a valve-opening pressure setting of 8 kPa, Battery J' having a valve-opening pressure setting of 15 kPa had a slight deformation in the battery jar at a late stage of its useful life, but without not much effect on its useful life. However, in particular when the device incorporating the battery requires strict control of a change in the size of the battery, the valve-opening pressure is preferably slightly reduced as with Inventive example battery J.

Furthermore, Inventive example batteries, especially, Battery K, Battery L, and Battery L', which are provided with a positive electrode grid surface of a Pb-Sn alloy, Pb-Sn alloy, and Pb-Sb-Sn alloy, reached the greatest number of life cycles in the life test A and thus had the longest useful life.

Furthermore, with Comparative example battery M, it was found after the life test A was completed that part of the negative electrode strap was corroded. When compared with other Inventive example batteries I to L, the Comparative example battery M was found in the life test A to have a slightly shorter life expectancy. This is presumably due to a drop in current collectivity which resulted from corrosion of the negative electrode strap. Accordingly, as the negative electrode strap alloy, it is preferable to use a Pb alloy containing no Sb such as Pb-Sn alloy.

Additionally, Battery J and battery J' tend to have a longer useful life than Battery I. This is presumably due to the fact that the control valve section prevents electrolyte loss caused by water evaporation. A large amount of electrolyte loss would cause an increase in sulfuric acid concentration in the electrolyte, often leading to a shortened useful life. However, with Battery J and Battery J', an increase in sulfuric acid concentration caused by water evaporation was presumably retarded when compared with Battery I, thereby providing a good life expectancy.

Note that in particular, Battery L and Battery L' having the positive electrode grid 107 surface provided with an alloy layer containing Sb tended to slightly increase in electrolyte loss after the same number of cycles, when compared with Battery K and Battery I, but had the best life expectancy.

The results of the life test B were also shown in Table 3, with their tendency being similar to those of the life test A. In particular, Inventive example batteries I to M have a good life expectancy because they have the electrolyte 19 in abundance and the mat separator 104 retains the active material.

Unlike in the life test A, Comparative example battery N exhibits a comparatively good life expectancy in the life test B. A good life expectancy was obtained because up to a temperature of about 40 degrees C, the gas absorption reaction on the negative electrode effectively occurs and the electrode plate active material was retained in the glass mat separator. On the other hand, Comparative example battery N, which is a typical liquid-type lead-acid rechargeable battery, reached the end of its useful life at 200 cycles because the sheet-like separator did not serve to retain a softened active material.

Inventive example Batteries I to M exhibited a better useful life than any of Comparative example batteries N to O'. In particular, Battery L and Battery L', which are provided with the positive electrode grid 107 surface of a Pb-Sb alloy or Pb-Sb-Sn alloy, had the largest final number of life cycles though their rate of electrolyte loss was higher than that of other batteries.

Furthermore, Battery O' incorporating a thin and lightweight battery jar had an extremely short useful life when compared with the other batteries. On the other hand, as described above, Inventive example batteries I to M have a good life expectancy without the need of replenishing water. These lead-acid rechargeable batteries can be provided at low costs because they can use the same thin and lightweight battery jar as that of the liquid-type lead-acid rechargeable battery instead of a thick and heavy battery jar as used in the conventional valve-regulated lead-acid rechargeable battery.

### INDUSTRIAL APPLICABILITY

As described above, according to the present invention, a lead-acid rechargeable battery provided includes positive electrode plates and negative electrode plates which are formed of a positive electrode grid and negative electrode grid of Pb-Ca alloy, and mat separators, in which all negative electrode straps are initially soaked in an electrolyte. The battery serves as a liquid-type lead-acid rechargeable battery at the beginning of service. Even when the electrolyte is reduced by electrolysis or the like, the battery also serves as a valve-regulated lead-acid
rechargeable battery of the negative electrode absorption type because the mat separator is laden with a required amount of electrolyte. Thus, the battery is suitable for realizing a lead-acid rechargeable battery which exhibits a good life expectancy under a wide range of conditions without the need of replenishing water until the end of its service life.

## Claims

1. A lead-acid rechargeable battery comprising:
an electrolyte (19);
a positive plate (16) with a positive electrode grid (107) of a Pb-Ca alloy;
a negative electrode plate (17) with a negative electrode grid of a Pb-Ca alloy, wherein the negative electrode plate is arranged such that an electrode surface of the negative electrode plate may initially be entirely soaked by the electrolyte;
a separator (104) formed of a fibrous mat; and
a negative electrode strap (1) collectively welding an ear portion of the negative electrode plate, wherein
the negative electrode strap (1) is formed of a Pb-Sn alloy, and
a control valve section (21, 41, 61) installed inside a cylindrical body (20) of a liquid-inlet cap (13) provided in a battery casing, the control valve section (21, 41, 61) being arranged such that the control valve section may open in response to an internal pressure of the battery and such that when the control valve section is closed, the control valve section prevents oxygen from flowing from the outside of the battery to the inside of the battery.

2. The lead-acid rechargeable battery according to claim 1, wherein
at least part of a surface of the positive electrode grid (107) which is in contact with an active material (108) is provided with a Pb-Sb alloy layer containing Sb.

3. The lead-acid rechargeable battery according to claim 1, wherein
the control valve section (21) comprises:
a valve storage assembly (25) which is formed of a bottom wall (23) having the vent hole (22) and of a side wall (24) provided around the bottom wall;
a valve assembly (26) disposed to cover the vent hole inside the valve storage assembly; and
a retainer plate (27) disposed on the valve assembly and having part thereof joined to the side wall.

4. The lead-acid rechargeable battery according to claim 1, wherein
the control valve section (41) comprises:
a bottom wall (43) having the vent hole (42);
a side wall (44) provided around the bottom wall;
a valve cylinder (45) protruded from the vent hole aperture in the same direction as the side wall is protruded;
a cap-shaped valve body (46) installed in the valve cylinder; and
a retainer plate (27) disposed above the top of the cap-shaped valve body and having part thereof joined to the side wall.

## Patentansprüche

1. Wiederaufladbare Blei-Säure-Batterie, die Folgendes umfasst:
einen Elektrolyten (19);
eine positive Platte (16) mit einem positiven Elektrodengitter (107) aus einer Pb-Ca-Legierung;
eine negative Elektrodenplatte (17) mit einem negativen Elektrodengitter aus einer Pb-Ca-Legierung, wobei die negative Elektrodenplatte derart angeordnet ist, dass eine Elektrodenoberfläche der negativen Elektrodenplatte zunächst vollständig mit dem Elektrolyten getränkt sein kann;
einen Separator (104), der aus einer Fasermatte ausgebildet ist; und
einen negativen Elektrodenstreifen (1), der einen Laschenabschnitt der negativen Elektrodenplatte kollektiv verschweißt, wobei
der negative Elektrodenstreifen (1) aus einer Pb-Sn-Legierung ausgebildet ist, und
einen Regelventilabschnitt (21, 41, 61), der in einem zylindrischen Körper (20) einer in einem Batteriegehäuse bereitgestellten Flüssigkeitseinlasskappe (13) eingebaut ist, wobei der Regelventilabschnitt (21, 41, 61) derart angeordnet ist, dass der Regelventilabschnitt sich als Reaktion auf einen Innendruck der Batterie öffnen kann, und derart, dass, wenn der Regelventilabschnitt geschlossen ist, der Regelventilabschnitt verhindert, dass Sauerstoff von außerhalb der Batterie in das Innere der Batterie strömt.

2. Wiederaufladbare Blei-Säure-Batterie nach Anspruch 1, wobei
wenigstens ein Teil einer Oberfläche des positiven Elektrodengitters (107), das mit einem aktiven Material (108) in Berührung steht, mit einer Sb-haltigen Pb-Sb-Legierungsschicht ausgestattet ist.

3. Wiederaufladbare Blei-Säure-Batterie nach Anspruch 1, wobei
der Regelventilabschnitt (21) Folgendes umfasst:
eine Ventilspeicheranordnung (25), die aus einer unteren Wand (23) mit dem Lüftungsloch (22) und aus einer um die untere Wand bereitgestellten Seitenwand (24) ausgebildet ist;
eine Ventilanordnung (26), die angeordnet ist, um das Lüftungsloch in der Ventilspeicheranordnung abzudecken; und
eine Halteplatte (27), die auf der Ventilanordnung angeordnet ist und einen Teil aufweist, der mit der Seitenwand verbunden ist.

4. Wiederaufladbare Blei-Säure-Batterie nach Anspruch 1, wobei der Regelventilabschnitt (41) Folgendes umfasst:
eine untere Wand (43) mit dem Lüftungsloch (42);
eine Seitenwand (44), die um die untere Wand herum bereitgestellt ist;
einen Ventilzylinder (45), der von der Lüftungslochöffnung in die gleiche Richtung hervorragt, in die die Seitenwand hervorragt;
einen kappenförmigen Ventilkörper (46), der im Ventilzylinder eingebaut ist; und
eine Halteplatte (27), die über der Oberseite des kappenförmigen Ventilkörpers angeordnet ist und einen Teil aufweist, der mit der Seitenwand verbunden ist.

## Revendications

1. Accumulateur au plomb-acide rechargeable comprenant :
un électrolyte (19) ;
une plaque positive (16) avec une grille d'électrode positive (107) d'un alliage Pb-Ca;
une plaque d'électrode négative (17) avec une grille d'électrode négative d'un alliage Pb-Ca, dans lequel la plaque d'électrode négative est disposée de sorte qu'une surface d'électrode de la plaque d'électrode négative puisse initialement être entièrement immergée dans l'électrolyte ;
un séparateur (104) constitué d'un mat fibreux ; et
une bande d'électrode négative (1) soudant collectivement une partie oreille de la plaque d'électrode négative, dans lequel
la bande d'électrode négative (1) est constituée d'un alliage Pb-Sn, et
une section de soupape de commande (21, 41, 61) installée à l'intérieur d'un corps cylindrique (20) d'un bouchon d'entrée de liquide (13) prévu dans un bac d'accumulateur, la section de soupape de commande (21, 41, 61) étant disposée de sorte que la section de soupape de commande puisse s'ouvrir en réponse à une pression interne de l'accumulateur et de sorte que, lorsque la section de soupape de commande est fermée, la section de soupape de commande empêche l'oxygène de circuler depuis l'extérieur de l'accumulateur vers l'intérieur de l'accumulateur.

2. Accumulateur au plomb-acide rechargeable selon la revendication 1, dans lequel
au moins une partie d'une surface de la grille d'électrode positive (107) qui est en contact avec un matériau actif (108) est constituée d'une couche d'alliage Pb-Sb contenant du Sb.

3. Accumulateur au plomb-acide rechargeable selon la revendication 1, dans lequel
la section de soupape de commande (21) comprend :
un ensemble de stockage de soupape (25) qui est constitué d'une paroi inférieure (23) présentant l'orifice d'évent (22) et d'une paroi latérale (24) prévue autour de la paroi inférieure ;
un ensemble de soupape (26) disposé pour recouvrir l'orifice d'évent à l'intérieur de l'ensemble de stockage de soupape ; et
une plaque de retenue (27) disposée sur l'ensemble de soupape et dont une partie est reliée à la paroi latérale.

4. Accumulateur au plomb-acide rechargeable selon la revendication 1, dans lequel la section de soupape de commande (41) comprend :
une paroi inférieure (43) présentant l'orifice d'évent (42) ;
une paroi latérale (44) prévue autour de la paroi inférieure ;
un cylindre de soupape (45) dépassant de l'ouverture d'évent dans la même direction de saillie que la paroi latérale ;
un corps de soupape en forme de bouchon (46) installé dans le cylindre de soupape ; et
une plaque de retenue (27) disposée au-dessus de la partie supérieure du corps de soupape en forme de bouchon et dont une partie est reliée à la paroi latérale.
